# EUROPEAN PATENT APPLICATION

(11) **EP 1 413 207 A2**
(43) Date of publication of application: **28.04.2004**
(21) Application number: 03256614.3
(22) Date of filing: 21.10.2003
(51) Int. Cl.: A23G 3/00, A21C 15/00

(54) **A cake decoration and a method of manufacture therefor**

(30) Priority: 21.10.2002 GB 0224473
(71) Applicant: Culpitt Limited, Ashington, Northumberland NE63 8UQ (GB)
(72) Inventor: Woodhouse, James Frederick, Killingworth Tyne & Wear NE12 6FZ (GB); Holtom, Stan, Ashington Northumberland NE63 0JP (GB); Jackson, Margaret Lesley, Bedlington Northumberland NE22 6HW (GB)
(74) Representative: Grant, John

(57) **Abstract**

The invention provides a cake decoration (2) made and a method of manufacture therefor. The cake decoration is made from a sugar paste composition that is rolled to an even thickness, cut to delineate a blank on a surface of which a design is created by off-set or screen printing. The printed sugar paste blank is then subjected to an embossing operation during which, an embossing tool of 'Teflon' coated magnesium, deforms the blank about defined lines of the design applied thereto whereby the design is given a three-dimensional appearance.

In order to further enhance the three-dimensional effect, the design is coated with a glaze composition that comprises 25% by weight of shellac.

## Description

This invention is concerned with improvements in a cake decoration, or the like, and a novel method for manufacturing a cake decoration.

When decorating a cake using a pre-formed sugar paste plaque, or the like, designs and other adornments may be provided on or added to the sugar paste plaque as desired.

If a design is added directly to the plaque, for example a picture of a cartoon character, it may be printed onto the sugar paste plaque by any known process such as 'screen printing' or 'offset printing'.

It is often the practice that designs are enhanced by adding pre-formed sugar paste decorations and/or figures to the printed surface of the sugar paste plaque, such practice adding to the time it takes to decorate a cake with the consequent added expense thereof.

One of the major drawbacks of a decorated cake, where the sugar paste plaque is merely provided with two-dimensional design, is that the whole effect may be lacking in visual appeal.

It is therefore one of the objects of the present invention to provide an improved cake decoration having enhanced visual appeal.

It is another of the objects of the present invention to provide a novel method of manufacture for an improved cake decoration.

Thus, the present invention conveniently provides a cake decoration comprising a sugar paste plaque having a design applied to the plaque, characterised in that the cake decoration is enhanced by embossments to the design giving it a three-dimensional effect.

Preferably, the embossed design is coated with a shellac glaze coat to further enhance the three-dimensional effect and the visual appeal thereof.

The present invention also conveniently provides a method of manufacture for a cake decoration comprising the steps of:
a) procuring a sheet of sugar paste material;
b) rolling the sheet of sugar paste material to an even thickness;
c) cutting the sheet of material to delineate a blank;
d) creating a design on an upper surface of the blank by:
   i) screen printing; or
   ii) off-set printing;
e) positioning the printed blank in register with an embossinq tool; and,
f) bringing the embossing tool into engagement with the printed blank whereby profiled ridges of the embossing tool deform the blank about defined lines of the design thereby giving the design a three-dimensional effect.

Preferably, the embossed design is coated with a glaze composition to further enhance the three-dimensional effect thereof.

Conveniently, the glaze composition comprises 25% by wt of shellac.

The embossing tool is preferably made from magnesium duly etched wih the required design and coated with a durable material, e.g. 'Teflon'(RTM); however, the tool may be made from mild steel, stainless steel, plastic, brass, copper or nylon and coated with any durable material as required.

There now follows, by way of example of the invention, a detailed description of a novel cake decoration and a method of manufacture therefor, which detailed description is to be read with reference to the accompanying drawings in which:
Figure 1 is a plan view of a cake decoration;
Figure 2 is an enlarged part section view along the line II-II of Figure 1;
Figure 3 is a side view of a press shown in an in-operative condition;
Figure 4 is a side view of the press of Figure 3 when in an operative condition; and,
Figure 5 is a part side view, in section, of the press of Figure 4.

There are very many ways in which a celebration cake may be decorated including the application of a two-dimensional design to an icing layer provided by a pre-formed sugar paste plaque.

One way of adorning the pre-formed sugar paste plaque is to apply a two-dimensional design or picture thereto. Such practice does not give a product with the same appeal when compared with cakes decorated with other moulded adornments affixed thereto.

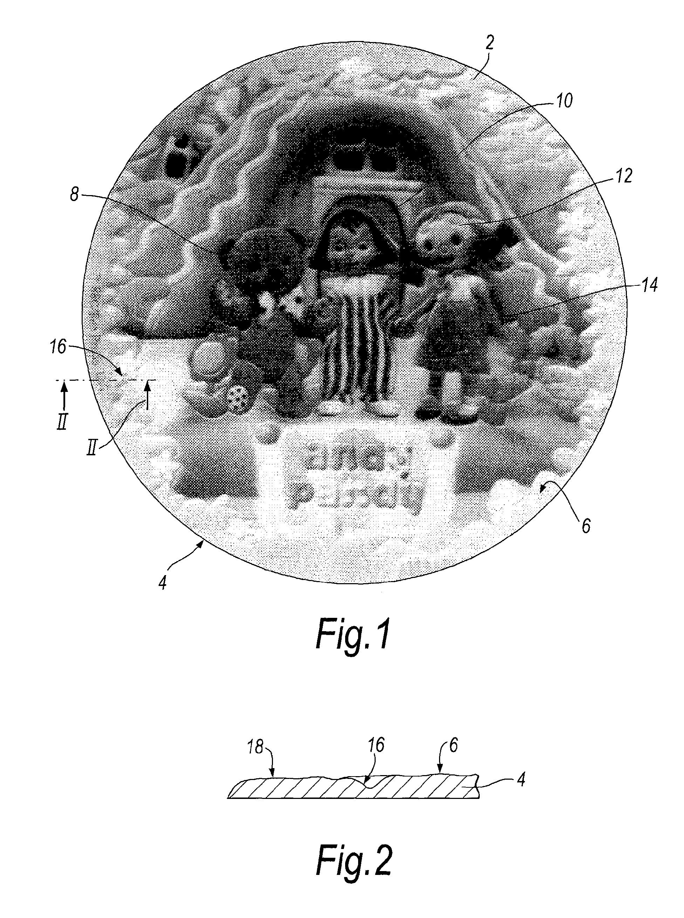

The cake decoration 2 provided by the present invention is made of sugar paste formed as a circular plaque 4 having a picture, including Andy Pandy characters 8, 10 and 12 printed in colour on an upper surface 6 of the plaque 4, see Figure 1.

The characters 8, 10 and 12 are emboldened by small indentations 14, which extend about the outlines of the three characters as shown in section view in Figure 2.

In addition, the outlines of the remaining parts 18 of the picture are emboldened by small indentations 16, which extend about the outlines of those remaining parts 18, see also Figure 1 and 2.

In manufacturing a cake decoration 2, according to the present invention, an operative procures a sheet of sugar paste and rolls the sheet to an even thickness in a calender press, not shown.

A blank 20 is cut from the sheet using an appropriate cutting die, not shown, the blank 20 being thereafter adorned with a two-dimensional picture in known manner, by a screen printing technique or offset printing technique.

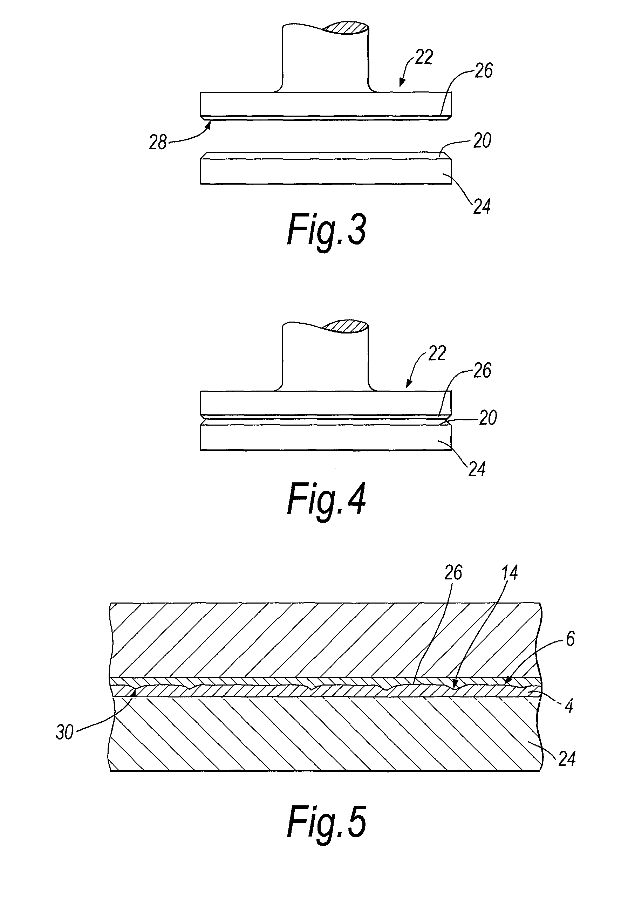

The blank 20 is then located on a support platen 24 of a press 22 with the two-dimensional picture of the blank 20 in register with an embossing tool 26, see Figure 3. Details of the registering means are not shown but may be of any convenient design.

The embossing tool 26 is made from magnesium and is coated with a layer 28 of durable material, viz. 'Teflon'.

The embossing tool 26 is etched to provide ridges 30, which ridges 30 are arranged to overlie the outlines 14 and 16 of the characters 8, 10 and 12 and the remaining parts 18 of the picture when the blank 20 is located in register as aforesaid.

Upon operation of the press 22, the ridges 30 of the embossing tool 26 are brought into engagement with the blank 20 along the outlines 14 and 16. Pressure is applied by the press 22 and the sugar paste, from which the blank 20 is made, is indented and deforms in the margins to either side of the outlines 14 and 16.

The deformation, of the sugar paste blank 22, results in the picture on the cake decoration 2 having the appearance of a 3-dimensional product.

The three-dimensional effect, of the embossed cake decoration 2, is further enhanced by coating the upper surface 6 thereof with a glaze composition; the coating being effected by any convenient process.

In one such process, a glaze coat, comprising 25% by wt of shellac, was sprayed onto the already embossed surface 6 of the cake decoration 2.

The process of embossing the sugar paste blank 20 is carried out whilst the sugar paste is workable and does not not resist the force of the embossing tool in moving the sugar paste to either side of the outlines 14 and 16.

It will be appreciated that edible inks are used for printing the picture on the blank 20; however, these do not form part of the invention and will not be described in detail.

Likewise, the compositions for the sugar paste are not included herein for the same reason.

The operation of press, to bring the tool 26 into pressing engagement with the upper surface of the sugar paste blank to deform said surface along the outlines 14 of the figures 8, 10 and 12 and the outlines 16 of the remaining parts 18, is described herein as 'embossing'.

This is because the action of the tool 26 is envisaged as indenting the sugar paste along said outlines and moving the sugar paste to the sides of the outlines with some consequent upward movement of some portion of the sugar paste.

It is appreciated, however, that there may not be any upward movement of the sugar paste and that the correct term for describing the action of the tool 26 on the sugar paste is that of de-embossing.

Thus, the term 'embossing', where used herein, relates to the action of the tool 26 irrespective of where the sugar paste is moved by the action of tool 26.

It will be readily appreciated that the cake decoration provided by the present invention is aesthetically pleasing and is more economical in time and expense than those two-dimensional cake decorations that are adorned with three-dimensional pre-formed products.

The sugar paste blank may be formed in its final shape as a plaque upon being cut from the sheet of sugar paste material. However, it may be advantageous, although not essential, to form an oversized blank from which a plaque may be cut after the printing, embossing and glaze coating steps have been effected.

## Claims

1. A cake decoration comprising a sugar paste plaque having a design applied to the plaque, **characterised in that** the cake decoration is enhanced by embossments to the design giving it a three-dimensional effect.

2. A cake decoration according to Claim 1, **characterised in that** the embossed design is coated with a shellac glaze coat to further enhance the three-dimensional effect and the visual appeal thereof.

3. A method of manufacture for a cake decoration comprising the steps of:
a) procuring a sheet of sugar paste;
b) rolling the sheet of sugar paste material to an even thickness;
c) cutting the sheet of material to delineate a blank;
d) creating a design on an upper surface of the blank by:
i) screen printing; or,
ii) off-set printing;
e) positioning the printed blank in register with an embossing tool; and,
f) bringing the embossing tool into engagement with the printed blank whereby profiled ridges of the embossing tool deform the blank about defined lines of the design thereby giving the design a three-dimensional effect.

4. A method of manufacture for a cake decoration according to Claim 3, **characterised in that** the embossed design is coated with a glaze composition to further enhance the three-dimensional effect thereof.

5. A method of manufacture for a cake decoration according to Claim 4, **characterised in that** the glaze composition comprises 25% by weight of shellac.

6. A method of manufacture for a cake decoration according to any one of Claims 3 to 5, **characterised in that** the embossing tool is made from magnesium duly etched with a durable material.

7. A method of manufacture for a cake decoration according to Claim 6, **characterised in that** the durable material is 'Teflon' (RTM).

8. A method of manufacture for a cake decoration according to any one of Claims 3 to 5, **characterised in that** the embossing tool is made from any one of mild steel, stainless steel, plastic, brass, copper or nylon coated with any durable material.
